# DEMANDE DE BREVET EUROPEEN

(11) **EP 1 108 933 A1**
(43) Date de publication de la demande: **20.06.2001**
(21) Numéro de dépôt: 00403444.3
(22) Date de dépôt: 08.12.2000
(51) Int. Cl.: F16K 15/03

(54) **Clapet anti-retour**

(30) Priorité: 17.12.1999 FR 9915942
(71) Demandeur: Perdriel, Jean-Claude, 75007 Paris (FR)
(72) Inventeur: Perdriel, Jean-Claude, 75007 Paris (FR)
(74) Mandataire: Laget, Jean-Loup

(57) **Abrégé**

Un clapet anti-retour comporte un battant (1) destiné à s'appliquer sur un siège (7) Ledit clapet est constitué de deux pièces, une première pièce comportant un anneau (2) et ledit battant (1) mobile en rotation par rapport à l'anneau (2), et une seconde pièce, globalement cylindrique, portant une première collerette (7) disposée à une extrémité pour constituer le siège de clapet.

Ladite seconde pièce porte une seconde collerette (9) externe disposée à une distance (10) de la première collerette (7) supérieure à l'épaisseur de l'anneau (2) et en ce que le diamètre (11) de la portion de la seconde pièce comprise entre les deux collerettes (7, 9) est inférieur au diamètre intérieur de l'anneau (2), la première pièce étant montée sur la seconde pièce en positionnant ledit anneau (2) entre lesdites collerettes (7, 9).

## Description

La présente invention concerne un clapet anti-retour comportant de manière connue en soi un battant adapté à venir au contact d'un siège de clapet disposé circonférentiellement sur une tubulure afin de couper la circulation d'un fluide dans ladite tubulure.

Il est connu d'articuler le battant de clapet latéralement sur le bord du siège de clapet. Cela se fait généralement à l'aide d'un axe solidaire du corps de clapet sur lequel est monté le battant. La plupart du temps, ces axes s'encrassent et des impuretés glissent sous le siège ce qui a pour conséquence que le clapet n'est plus étanche.

Pour éviter cela, il existe des clapets comportant un obturateur central, de forme oblongue ou constitué par une bille, dans lesquels le colmatage est réduit. Mais l'obturateur disposé au milieu du corps de clapet créé un frein générateur de pertes de charge dans la tubulure lorsque le battant est en position ouverte.

Certains clapets à bille ont une forme en Y afin que la bille puisse se loger dans un logement disposé obliquement par rapport à la tubulure et être dégagée de la tubulure. Ces clapets ne fonctionnent pas bien car la bille reste souvent à l'intersection des conduites et ne dégage pas totalement la tubulure.

Il est également connu du GB 1 351 196 un clapet constitué d'une première pièce comportant un anneau et un battant monté mobile en rotation par rapport audit anneau au moyen d'une languette et d'une seconde pièce globalement cylindrique terminée par une surface plane formant siège de clapet. L'anneau de la première pièce est inséré dans une rainure de la seconde pièce pour fixer la position du battant par rapport au siège de clapet.

Les clapets à battant à articulation latérale n'ont pas, par conception, un bon système de contact équilibré sur tout le pourtour du battant. En effet, si le battant commence à se comprimer près de l'axe, il se comprime moins sur le reste de sa périphérie, et, à l'inverse, si le battant touche d'abord par sa périphérie, il n'appuie pas bien près de l'axe, ce qui entraîne des fuites.

Ces clapets sont donc généralement utilisés lorsqu'une pression élevée règne dans la tubulure car les écarts de portée sur le siège sont compensés par l'écrasement du battant.

Par ailleurs, afin d'améliorer l'étanchéité, les sièges des clapets standards comportent des stries ou des nervures circulaires qui s'impriment dans le battant caoutchouc. Si dans le temps, le battant marqué par ces stries se déplace légèrement sur le siège, il n'est plus plaqué convenablement et il y a des fuites.

La présente invention vise à éviter ces inconvénients en proposant un clapet s'auto-réglant lors de sa fermeture, pour que la pression s'équilibre sur tout le périmètre du battant d'une façon uniforme.

A cet effet, l'invention propose un clapet anti-retour comportant un battant destiné à s'appliquer sur un siège, ledit clapet étant constitué de deux pièces, une première pièce comportant un anneau et ledit battant mobile en rotation par rapport à l'anneau, et une seconde pièce, globalement cylindrique, portant une première collerette disposée à une extrémité pour constituer le siège de clapet, caractérisé en ce que ladite seconde pièce porte une seconde collerette externe disposée à une distance de la première collerette supérieure à l'épaisseur de l'anneau et en ce que le diamètre de la portion de la seconde pièce comprise entre les deux collerettes est inférieur au diamètre intérieur de l'anneau, la première pièce étant montée sur la seconde pièce en positionnant ledit anneau entre lesdites collerettes.

Le clapet selon l'invention est encore remarquable par le fait que
- l'anneau est disposé à distance dudit battant et attaché à celui-ci par une excroissance formant une charnière permettant au battant de pivoter,
- la première pièce est en élastomère,
- une corde périphérique de section demi-circulaire destinée à assurer l'étanchéité du clapet est formée sous le battant,
- la première collerette présente une échancrure plus large que l'excroissance,
- la collerette a une face externe plane,
- la seconde pièce est obtenue par moulage d'une matière thermoplastique,
- deux oreilles sont constituées sur la collerette afin de protéger la charnière du battant,
- l'anneau est de section carrée.

L'invention sera mieux comprise grâce à la description qui va suivre donnée à titre d'exemple non limitatif en référence aux dessins annexés dans lesquels :
- la figure 1 est une vue en coupe de la première pièce,
- la figure 2 est une vue de dessus de la première pièce,
- la figure 3 est une vue en coupe de la seconde pièce,
- la figure 4 est une vue de dessus de la seconde pièce,
- les figures 5 et 7 sont des vues en coupe de deux exemples de réalisation de la partie avale de la tuyauterie dans laquelle peut être installé un clapet suivant l'invention,
- la figure 6 est une vue en coupe d'un exemple de réalisation de la partie amont de la tuyauterie.

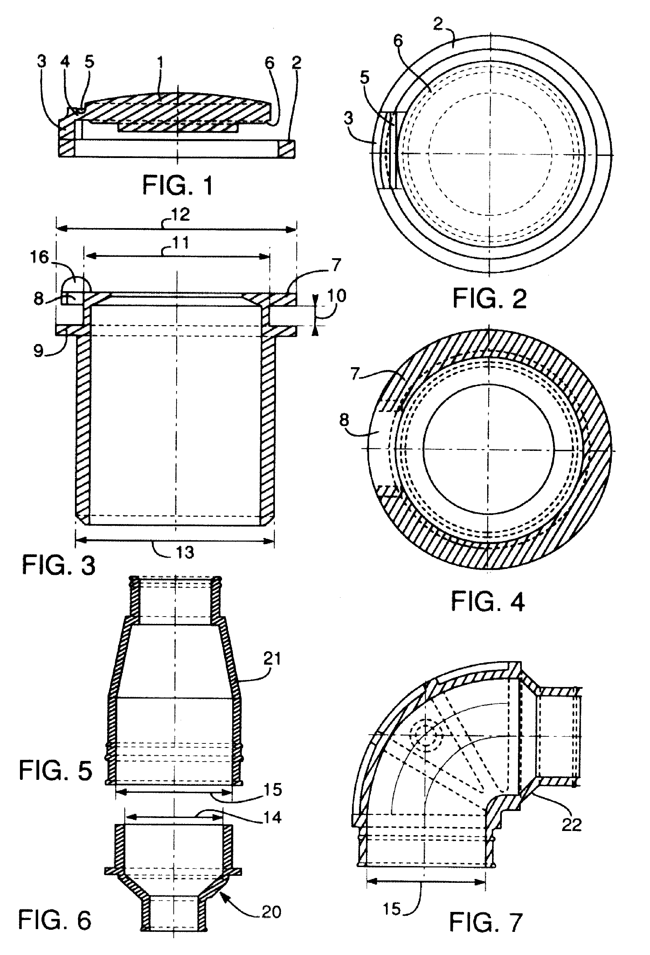

Comme visible aux figures 1 et 2, la première pièce comporte un battant 1 et un anneau de section carrée 2 disposé à distance dudit battant 1 et attaché à celui-ci par une excroissance 3 formant, avec l'évidemment linéaire 5, une charnière 4. Cette charnière 4 permet au battant 1 de pivoter facilement, avec peu d'efforts. La charnière 4 est d'encombrement peu important et ses formes sont arrondies afin de réduire les possibilités d'accrochage de matières fibreuses pouvant se trouver dans le fluide circulant dans la tubulure, un tel accrochage nuisant à l'étanchéité du clapet.

La première pièce est par exemple réalisée en élastomère et moulée en une seule pièce.

Sous le battant 1 est moulée une corde périphérique 6 de section demi-circulaire destinée à assurer l'étanchéité du clapet.

La seconde pièce représentée aux figures 3 et 4 se présente globalement sous la forme d'un cylindre destiné à être monté dans la tubulure comporte, à une première extrémité, une première collerette 7 destinée à constituer le siège de clapet et présentant une échancrure 8, plus large que l'excroissance 3, pour laisser passer la charnière 4 du battant 1. Cette collerette 7 a une face externe plane pour que le battant 1, une fois en place, plaque correctement sur le siège de clapet. Comme visible au dessin, la collerette 7 s'étend tant vers l'intérieur que vers l'extérieur de la seconde pièce.

La seconde pièce porte une deuxième collerette circulaire 9.disposée à distance de la première collerette 7 formant le siège de clapet La distance verticale 10 séparant les deux collerettes est supérieure à l'épaisseur de l'anneau 2. Le diamètre 11 de la portion de la seconde partie comprise entre les deux collerettes est inférieur au diamètre intérieur de l'anneau 2.

La seconde pièce est par exemple obtenue par moulage d'une matière thermoplastique.

Le clapet est obtenu par le montage de la première pièce sur la seconde pièce, à cet effet, l'anneau 2 de section carrée est déformé afin d'être positionné entre les deux collerettes 7 et 9 tandis que l'excroissance 3 est disposée dans l'échancrure 8.

Grâce à cette disposition selon l'invention, le battant 1 et son anneau 2 peuvent se déplacer verticalement sur une faible amplitude du fait que la distance séparant les collerettes de l'anneau 2 est supérieure à l'épaisseur de l'anneau 2. Ainsi lors d'un retour du fluide, le battant 1 se colle d'une manière parfaite sur le collerette 7, tous les points de la corde périphérique 6 étant en équipression totale. L'étanchéité est réalisée par la corde 6 sur laquelle se concentrent tous les efforts dus à la pression crée par le retour du fluide.

L'intérêt de ce système est que, dans le temps, la seule action que peut induire la pression est d'écraser légèrement la corde 6 ce qui ne nuit pas à l'étanchéité.

Par ailleurs, avec les turbulences du fluide, le battant 1, en se plaquant sur la collerette 7, peut subir, lors du contact, de petits déplacements latéraux qui n'ont pas d'incidence sur l'étanchéité du fait que la collerette 7 est plane.

Ce système à liberté verticale et horizontale du battant 1 associé à une charnière 4 très peu colmatable et une corde fine 6 assurant une forte pression sur une collerette 7 plane, donne à ce système de clapet anti-retour un usage très élargi par rapport aux clapets classiques (très faible perte de charge, étanchéité sous de faibles pressions, fonctionnement en eaux chargées, absence d'entretien, vieillissement peu pénalisant).

Pour le montage du clapet anti-retour selon l'invention dans une tubulure, la seconde pièce est fixée une pièce en caoutchouc 20, par exemple en étant introduite à force dans celle-ci, en étant positionnée de manière telle que la collerette circulaire 9 soit en appui contre l'extrémité de ladite pièce en caoutchouc. Les diamètres 13 et 14 sont à cet effet identiques. La seconde pièce est disposée de manière telle que ladite pièce 20 soit disposée en amont du clapet.

Par dessus cet ensemble, est placée une deuxième pièce en caoutchouc 21 ou 22 de diamètre intérieur 15 égal au diamètre extérieur 12 des deux collerettes. Cette deuxième pièce est droite 21 ou coudée 22 et vient chevaucher la première pièce 20. Un simple collier de serrage sur le recouvrement des deux pièces, assure le montage et l'étanchéité de l'ensemble. La présence des deux collerettes 7 et 9 permet de laisser le battant libre de ses mouvements malgré la présence proche de la pièce 21 ou 22.

Deux oreilles 16 peuvent être constituées sur la collerette 7 constituant le siège afin de protéger la charnière et de lui laisser sa liberté de mouvement vertical et d'ouverture.

## Revendications

1. Clapet anti-retour comportant un battant (1) destiné à s'appliquer sur un siège (7), ledit clapet étant constitué de deux pièces, une première pièce comportant un anneau (2) et ledit battant (1) mobile en rotation par rapport à l'anneau (2), et une seconde pièce, globalement cylindrique, portant une première collerette (7) disposée à une extrémité pour constituer le siège de clapet, caractérisé en ce que ladite seconde pièce porte une seconde collerette (9) externe disposée à une distance (10) de la première collerette (7) supérieure à l'épaisseur de l'anneau (2) et en ce que le diamètre (11) de la portion de la seconde pièce comprise entre les deux collerettes (7, 9) est inférieur au diamètre intérieur de l'anneau (2), la première pièce étant montée sur la seconde pièce en positionnant ledit anneau (2) entre lesdites collerettes (7, 9).

2. Clapet selon la revendication 1, caractérisé par le fait que l'anneau (2) est disposé à distance dudit battant (1) et attaché à celui-ci par une excroissance (3) formant une charnière (4) permettant au battant (1) de pivoter.

3. Clapet selon la revendication 1 ou selon la revendication 2, caractérisé par le fait que la première pièce est en élastomère.

4. Clapet selon l'une quelconque des revendications 1 à 3, caractérisé par le fait qu'une corde périphérique (6) de section demi-circulaire destinée à assurer l'étanchéité du clapet est formée sous le battant (1).

5. Clapet selon l'une quelconque des revendications précédentes, caractérisé par le fait que la première collerette (7) présente une échancrure (8) plus large que l'excroissance (3).

6. Clapet selon l'une quelconque des revendications précédentes, caractérisé par le fait que la collerette (7) a une face externe plane.

7. Clapet selon l'une quelconque des revendications précédentes, caractérisé par le fait que la seconde pièce est obtenue par moulage d'une matière thermoplastique.

8. Clapet selon l'une quelconque des revendications précédentes, caractérisé par le fait que deux oreilles (16) sont constituées sur la collerette (7) afin de protéger la charnière (4) du battant (1).

9. Clapet selon l'une quelconque des revendications précédentes, caractérisé par le fait que l'anneau (2) est de section carrée.
